# EUROPEAN PATENT SPECIFICATION

(11) **EP 4 110 078 B1**
(45) Date of publication and mention of the grant of the patent: **06.09.2023**
(21) Application number: 21708577.8
(22) Date of filing: 22.02.2021
(51) Int. Cl.: A23L 11/00, A23L 19/00, A23L 27/60, A23L 35/00

(54) **EMULSIFIED FOOD FORMULATION**
EMULGIERTE NAHRUNGSMITTELFORMULIERUNG
COMPOSITION ALIMENTAIRE ÉMULSIFIÉE

(30) Priority: 27.02.2020 IT 202000004060
(43) Date of publication of application: 04.01.2023
(73) Proprietor: BARILLA G. e R. Fratelli S.p.A., 43100 Parma (IT)
(72) Inventor: CASSOTTA, Fabrizio, 26900 Lodi (IT); DE TATA, Vincenzo, 43125 Parma (IT); D'ALESSANDRO, Alessandro, 43123 Parma (IT)
(74) Representative: Botti & Ferrari S.p.A.
(86) International application number: PCT/EP2021/054263
(87) International publication number: WO 2021/170517

(56) References cited:
- EP-A1- 1 008 308
- EP-A1- 3 578 062
- WO-A1-2012/089448
- WO-A1-2013/138906
- WO-A1-2014/102835
- WO-A1-2020/002345

## Description

### Field of application

The present invention refers to the sector of the food industry.

In particular, the invention relates to an emulsified food formulation, being suitable to be used as a condiment for salads and cold dishes, or as a spreadable cream for garnishing or filling bread and similar bakery products and/or as an accompaniment for dishes of various kinds.

### Prior art

It is known that industrially prepared condiments, for example ready-made sauces and dressings, are widely used by consumers because they are ready-to-use food products and are easily storable at room temperature or refrigerated.

It is also known that, over time, such condiments can undergo degradation phenomena which, generally, concern the physical stability of the product.

In fact, most of the industrially prepared condiments comprise an aqueous phase and an oil phase, emulsified with each other, which as the storage period progresses show the tendency to separate from each other.

This phenomenon can be associated with a perception of deterioration or, more generally, with a loss of genuineness of the food product by the consumer.

In the sector, it is known to add specific products such as thickeners, stabilizers and emulsifiers (indicated with codes E400-E499 on the labels of condiments according to the classification of the European Food Safety Authority, EFSA), in order to counteract and slow down this separation phenomenon of the oil phase from the aqueous phase.

In particular, thickeners have the purpose of thickening the condiment to guarantee a sufficiently compact consistency, while emulsifiers and stabilizers have the function of delaying as much as possible the separation of the aqueous phase from the oil phase during the storage period of the condiment.

A further critical aspect of an industrially prepared condiment is the storage duration at room temperature (20°C), known also as "shelf-life".

The shelf-life is notoriously not only correlated with the physical stability, but also with the chemical and microbiological stability of the food; for this reason, industrially prepared food products also comprise preservatives (E200-299) and antioxidants (E300-399), whose function is to minimize the possibility of spreading bacteria and/or fungi which damage and deteriorate the food product.

CN 108013148 relates to a drink made of peanut milk, containing in suspension solid particles of peanuts, coconut, walnuts and/or hazelnuts; the suspension contains different stabilizers including citrus fiber, microcrystalline cellulose, carboxymethylcellulose, mono- and diglycerides and xanthan gum.

CN 107079995 relates to a drink with lactic acid bacteria containing mushroom extract, which contains various ingredients including citrus fiber and pulverized pine nuts, as well as at least one stabilizing agent, such as for example pectin, carboxymethylcellulose and xanthan gum.

WO 2020/002345 relates to a ready-to-use food formulation in the form of oil-in-water emulsion, which can be stored at a temperature comprised between 2°C and 30°C for at least two weeks, and which comprises at least one vegetable in comminuted form (for example basil), vegetable oil and at least one protein concentrate derived from oleaginous seeds, salt, sugar and natural flavourings. The emulsified formulation has a rotational viscosity higher than 150 Pa*s, a pH between 3.7 and 5, and a value of water activity not higher than 0.95. This formulation does not comprise added vegetable fibers.

WO 2012/089448 describes oil-in-water acidified emulsions that have been stabilized by incorporation of a small quantity of finely ground pulse seeds in the emulsion; such emulsions can be obtained by mixing the aqueous and oil phases in conventional mixers under condition of reduced shear, for example 4500 rpm or less. This formulation comprises neither oleaginous seeds nor added vegetable fibers.

EP 3 578 062 relates to an emulsified condiment comprising pulses and oleaginous seeds (for example almonds) in form of fine particles, an oil or a fat, an organic acid (having acidifying and preservative activities, for example acetic acid) and optionally a vegetable. This condiment has a particle modal diameter comprised between 0.3 and 100 µm and does not comprise added vegetable fibers.

However, the stabilizing agents, as well as the preservative agents, added to the industrially prepared condiments are not positively perceived by the consumer, who is increasingly attentive to and concerned about the healthiness and genuineness of the used ingredients, and who is looking in particular for "clean label" products, i.e. without food additives.

Therefore, the technical problem underlying the present invention is to provide a food formulation which remains substantially unaltered from the point of view of the physical and microbiological stability during its shelf life, which is "clean label", i.e. free of food additives, thereby overcoming the problems encountered in the prior art.

### Summary of the invention

This technical problem is solved, according to the present invention, by a ready-to-use emulsified food formulation, being free of food additives consisting of thickeners, emulsifiers and stabilizers, comprising at least one vegetable in a finely divided form, vegetable oil, water and at least one oleaginous seed in a finely divided form,
wherein said oleaginous seed is present in a quantity comprised between 0.1% and 15% by weight of the total weight of the formulation,
said emulsified food formulation being obtained by homogenization carried out at a pressure equal to or higher than 10000 kPa and being characterized by a modal diameter of the particles contained therein higher than or equal to 300 µm and by additionally containing a vegetable fiber in a finely divided form, having a fiber content higher than 70% w/w and a water binding capacity higher than 5 g water/g dry matter.

The above-mentioned vegetable fiber in a finely divided form preferably has a humidity content less than 10%.

The above-mentioned fiber content is preferably comprised between 75% and 80% w/w and the water binding capacity measured by an internal method inspired by the official method AACC 56-37.01, is preferably comprised between 6.0 and 28.0 g water/g dry matter.

The modal diameter of the particles contained in the formulation measured by the light scattering method is preferably comprised between about 300 and 1500 micrometers, advantageously between 700 and 900 micrometers.

The expressions "oleaginous seeds" or "shell fruit", used herein interchangeably, are understood as meaning seeds and/or fruits without husk and pericarp, which are ripe and have undergone drying, and which comprise almonds, hazelnuts, walnuts, cashews, pecan nuts, macadamia nuts, pistachios, peanuts, pine nuts, hemp seeds, sunflower seeds, pumpkin seeds, flax seeds, and chia seeds.

The food formulation according to the present invention is "free of food additives consisting of thickeners, emulsifiers and stabilizers", meaning by this expression all thickeners, emulsifiers and stabilizers not of natural origin which are conventionally added to industrial food preparations.

Preferably, the above-mentioned homogenization is carried out at a pressure comprised between 15000 kPa and 30000 kPa.

Preferably, the at least one vegetable fiber in a finely divided form is selected from the group comprising citrus fiber, apple fiber, pea fiber, potato fiber, carrot fiber and rice fiber, and has an average particle size equal to or less than 1500 µm.

Preferably, the at least one oleaginous seed in a finely divided form is selected from the group comprising almond, cashew, pistachio, hazelnut, walnut, pecan nut, macadamia nut, pine nuts, hemp seeds, sunflower seeds, pumpkin seeds, flax seeds and chia seeds, peanuts, and has an average particle size equal to or less than 1500 µm.

According to a preferred embodiment of the present invention, the vegetable fiber is citrus fiber and the oleaginous seed is cashew.

According to another equally preferred embodiment of the present invention, the vegetable fiber is apple fiber, and the oleaginous seed is almond.

Preferably, the at least one vegetable in a finely divided form is selected from the group consisting of basil, parsley, thyme, marjoram and oregano and it is more preferably basil.

Preferably, the at least one vegetable in a finely divided form is present in a quantity comprised between 10% and 15% by weight of the total weight of the formulation and has an average particle size equal to or less than 1500 µm.

Preferably, the vegetable oil is selected from sunflower oil, corn oil, rice oil, sesame oil, peanut oil and olive oil, in particular extra virgin olive oil, and it is more preferably sunflower oil.

Preferably, the vegetable oil is present in a quantity comprised between 10% and 15% by weight of the total weight of the formulation.

Preferably, the above-mentioned food formulation further comprises at least one ingredient selected from salt, sugars, starches, vegetable proteins, legumes, garden vegetables, leafy greens (in particular chards, spinaches, cabbages, escarole) cereals and natural flavourings.

Preferably, the above-mentioned food formulation further comprises at least one acidifying ingredient selected from the group consisting of citrus juices, more preferably concentrated citrus juices, and vinegar, more preferably selected from apple cider vinegar, balsamic vinegar, honey vinegar, white wine vinegar and red wine vinegar.

Preferably, the above-mentioned food formulation has a rotational viscosity greater than 80 Pa•s, more preferably greater than 115 Pa•s, at a temperature of 22°C.

Preferably, the above-mentioned food formulation is characterized by a pH comprised between 3.0 and 5.0, more preferably between 3.5 and 3.9, and by a value of water activity (a_{w}) higher than or equal to 0.95, preferably comprised between 0.95 and 0.99.

Preferably, the food formulation as defined above is storable at a temperature comprised between 2°C and 30°C for a time period of at least two weeks, preferably for 24 months.

In another aspect thereof, the present invention also relates to the use of a food formulation as defined above as a condiment.

Therefore, the present invention relates to a ready-to-use emulsified food formulation, being free of food additives consisting of thickeners, emulsifiers and stabilizers, which comprises at least one vegetable in a finely divided form, vegetable oil, water, at least one vegetable fiber in a finely divided form and at least one oleaginous seed in a finely divided form, as defined above.

Advantageously, the vegetable fiber contained in the present formulation provides a sufficiently thick consistency to the present formulation, thus making it suitable for its use as a condiment.

"Citrus fiber" is understood as meaning a fiber obtained by citrus fruits selected from orange, lime, lemon and grapefruit; example of commercially available citrus fibers which can be used in the formulation of the present invention are HERBACEL^{®} AQ^{®} Plus Citrus and Citri-Fi^{®} 100.

Advantageously, the finely divided oleaginous seed contained in the present formulation acts as a natural emulsifier, significantly slowing down the phenomenon of separation of the oil phase from the aqueous phase.

Advantageously, the present formulation is obtained by subjecting the mixture of the above-mentioned ingredients to a high-pressure homogenization step (equal to or higher than 10000 kPa).

The expression "high-pressure homogenization", as used herein, means a process of homogenization during which a process fluid is subjected to extremely intense fluid-mechanical stresses, which cause the particles suspended in the liquid to break into smaller fragments, down to micrometric and nanometric sizes.

Advantageously, the high-pressure homogenization applied to the formulation of the invention guarantees the stability of the emulsion as well as a uniform distribution of the suspended solid particles in the oil and aqueous phases.

In particular, this technique contributes to significantly slowing down the phenomenon of separation of water or oil from the present formulation, during the storage period.

On the contrary, as shown in detail below, a homogenization at low-pressure of the same formulation does not prevent this phenomenon from occurring during the storage period.

The expression "[ingredient] in a finely divided form", as used herein, means the ingredient in question (vegetable fiber or oleaginous seed) after it has been subjected to mechanical grinding (for example by means of colloidal mills, cutters, immersion homogenizers) and subsequently to high-pressure homogenization, as defined above, and therefore has a particle size equal to or less than 1500 micrometers (µm), preferably from 1 to 500 micrometers.

The combination of the vegetable fiber and the oleaginous seed in the food formulation of the invention, together with the fact that the formulation itself is subjected to high-pressure homogenization, thus allows to emulsify the oil phase comprising the above-mentioned vegetable oil in the aqueous phase made of water and the water-soluble substances dissolved therein and, furthermore, allows to effectively stabilize the formulation from a physical point of view (consistency and viscosity).

In fact, preferably, the food formulation according to the present invention advantageously has a rotational viscosity higher than 80 Pa•s, more preferably higher than 115 Pa•s at a temperature of 22°C.

According to the present invention, these values of rotational viscosity were determined by means of a rheometer MCR-101 Anton Paar ^{©} (temperature 22°C, shear rate 1 s⁻¹).

The measurement is carried out directly on a jar containing the formulation according to the invention, subjecting the formulation, previously thermostated at 22°C, to a rotational stress (at a constant share rate at 1 s⁻¹) by a paddle measuring system which is rotated inside the jar at a predetermined and constant height.

The present formulation advantageously comprises other ingredients, including at least one vegetable in a finely divided form, preferably consisting of basil leaves.

The expression "basil leaves", as used herein, means leaves of plant specimens belonging to any variety of the species Ocimum basilicum, according to the Linneo classification.

The expression "concentrated citrus juice", as used herein, means the juice extracted from citrus fruits (for example lemon, lime, orange, grapefruit), used in the present formulation to balance the taste (mainly acidity and sweetness) and control the pH (acidifying effect).

In accordance with a preferred embodiment, the food formulation according to the present invention may have the following general recipe, in which the percentages are to be regarded as expressed by weight relative to the overall weight of the formulation:

| | |
|---|---|
| Basil | 10-15% |
| Vegetable oil | 10-15% |
| Oleaginous seed | 4-8% |
| Concentrated citrus juice | 8-12% |
| Vegetable fiber | 0.2-0.5% |
| Salt | 0.5-1.5% |
| Water | q.s. at 100% |

In order to ensure the microbiological stability during the whole storage period of the food formulation, which is free of antimicrobial and preservative agents, the formulation is subjected to a pasteurization heating treatment.

Preferably, this pasteurization treatment occurs at high temperatures (90-100°C) and for a time period sufficient to reduce the microbiological growth of the mixture, without compromising the organoleptic characteristics of each ingredient used for the formulation itself.

Ultimately, in an entirely advantageous manner, the food formulation according to the present invention is particularly suitable for the use as a condiment for salads and cold dishes, together with other ingredients or also on its own.

Furthermore, thanks to its particular characteristics of creamy consistency and viscosity, the food formulation according to the present invention is also particularly suitable for topping or filling for bread, pizza and similar bakery products and/or as an accompaniment for dishes of various kinds, for example starters, side dishes or main courses.

The present invention also relates to the use of a food formulation as described above as a condiment.

Advantageously, the above-mentioned use of the ready-to-use food formulation according to the invention is particularly convenient during the whole shelf life of this product, without the need for any further treatment such as mechanical processing or cooking.

Further features and advantages of the present invention will emerge from the description, provided hereinbelow, of an embodiment of the food formulation according to the present invention, provided by way of an indicative and non-limiting example with reference to the attached drawings.

### Brief description of the drawings

Figure 1 refers to a series of photographs which show how the stability of a same emulsified food formulation changes by varying the homogenization conditions and the concentration of the oleaginous seed (cashews) contained in the formulation.
Figure 2 is an image of the formulation according to Example 2 of the present invention, obtained by the optical microscope Eclipse E400 Nikon ^{®}, 10× objective lens.
Figure 3 shows a graph of the modal distribution of the diameter of the particles contained in the formulation according to Example 2.

### Detailed description

### Example 1 - Example of formulations according to the present invention.

Some examples of recipes of the emulsified food formulation according to the present invention are reported below:

| | Ingredient | weight (g) |
|---|---|---|
| Recipe a) | Water | 60 |
| | Basil leaves | 13 |
| | Sunflower oil | 11.7 |
| | Cashews | 5 |
| | Concentrated lemon juice | 9 |
| | Citrus fiber (HERBACEL^{®} AQ^{®} Plus Citrus) | 0.30 |
| | Salt | 1 |
| | | |
| Recipe b) | Water | 59.3 |
| | Basil leaves | 13 |
| | Sunflower oil | 11.7 |
| | Almonds | 5 |
| | Concentrated orange juice | 9 |
| | Apple fiber | 1 |
| | Salt | 1 |

| | | |
|---|---|---|
| Recipe c) | | |
| | Water | 60 |
| | Oregano leaves | 13 |
| | Sunflower oil | 11.6 |
| | Pistachios | 5 |
| | Concentrated lime juice | 9 |
| | Citrus fiber (HERBACEL^{®} AQ^{®} Plus Citrus) | 0.40 |
| | Salt | 1 |
| | | |
| Recipe d) | Water | 59.6 |
| | Parsley leaves | 13 |
| | Corn oil | 11.7 |
| | Cashews | 5 |
| | Concentrated lemon juice | 9 |
| | Pea fiber | 0.70 |
| | Salt | 1 |

### Example 2 - Method of production of a food formulation according to the present invention

Below is shown an example process for obtaining a ready-to-use emulsified formulation according to the invention starting from recipe a) according to the above-shown Example 1.

Among the ingredients listed in the above-mentioned recipe a), the fresh basil leaves were initially washed.

About 2% w/w of the basil leaves were isolated and set aside for later addition.

Sunflower oil, concentrated lemon juice, citrus fiber (HERBACEL^{®} AQ^{®} Plus Citrus), salt and cashews were then added to the remaining part of the basil leaves in a colloidal mill (model MZ 80, Frymakoruma^{®}, motor rotation speed 2888 min⁻¹).

The outer element of the colloidal mill (that is the stator) was fixed, while the internal cone (the rotor) was moving at high speed.

Crushing was caused by a simultaneous cutting and rubbing action of the material moving through the grooves of the surfaces and by an induced action of high-frequency vibration. These actions exerted high pressure-tensile forces on the product particles so that they were crushed and ripped. An intense vortex inside the grinding passage and the action connected thereto determine the high crushing, mixing and homogenizing power operated by the colloidal mill. The basil leaves and cashews are thus comminuted and simultaneously mixed with the sunflower oil and the other ingredients.

Subsequently, the mixture was introduced into the NS2006 L homogenizer by the company GEA Niro Soavi^{®}, at a feed rate of 40 litres/hour, and was treated according to the following steps:
- First homogenization stage at 12000 kPa, at 40°C and 40 litres/hour;
- Second homogenization stage at 28000 kPa, at 40°C and 40 litres/hour.

The resulting homogenized emulsified formulation had an average particle size equal to about 500 µm.

The previously isolated fraction of basil leaves, which was later roughly ground in order to keep the visibility of the basil leaves in the end product, was then added to such formulation.

At the end of this phase, the emulsified formulation was heated at 95°C, dosed inside glass jars, which were then sealed with a specific metal safety cap and immersed in boiling water (98°C) for 30 minutes, so as to obtain the complete pasteurization of the formulation.

The thus-obtained formulation appeared as a viscous fluid with creamy and uniform consistency, characterized by an overall intense green and non-transparent colour.

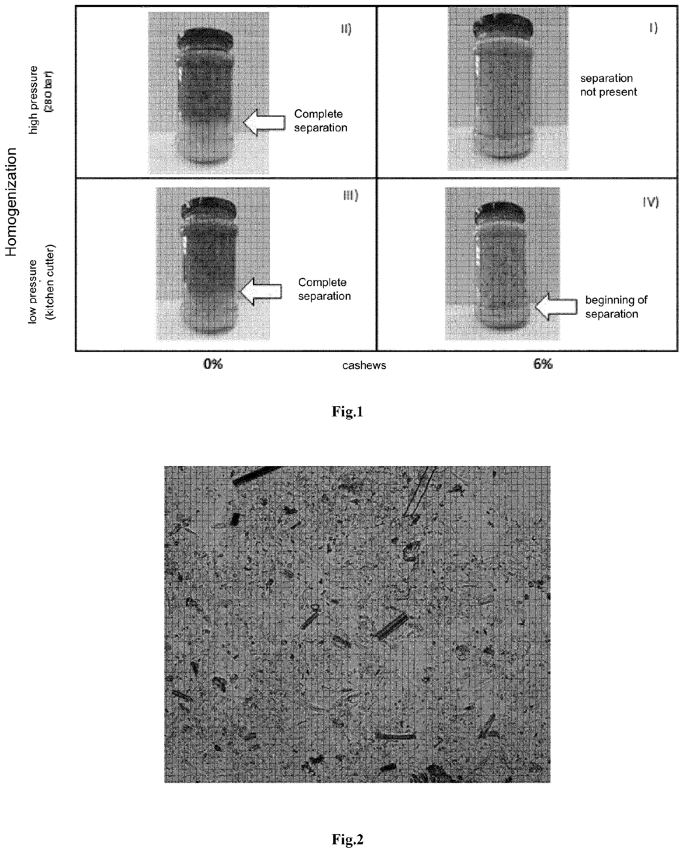

The uniformity of the particle dispersion of basil, cashew and citrus fiber was verified by an optical microscope Eclipse E400 Nikon ^{®}, 10× objective lens (figure 2).

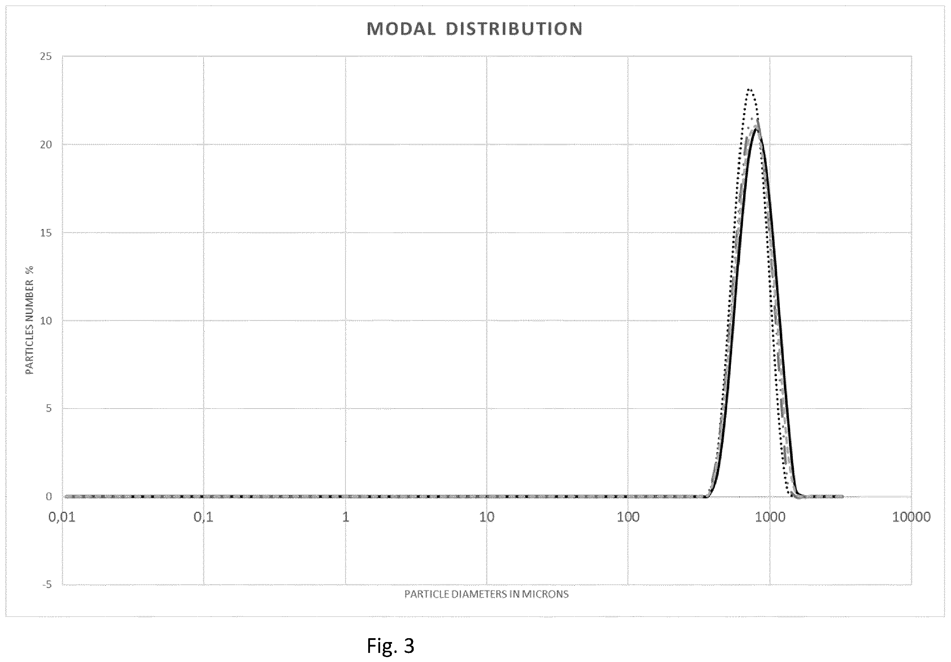

The modal diameter distribution of the particles contained in the formulation is shown in Figure 3.

### Example 3 - Comparative test

A comparative test was carried out between a formulation according to the invention (I) and formulations not according to the invention (II, III and IV), according to the following recipes, in order to evaluate whether, by varying the parameters of the type of homogenization and the quantity of an oleaginous seed incorporated in the formulation according to the invention, the latter showed changes from the point of view of the physical stability, by particularly analysing the phenomenon of the separation of the aqueous phase from the oil phase.

The tested samples were obtained according to the procedure described in Example 2, starting from ingredients as specified below for each sample and by applying specific homogenization steps according as follows :
- Formulation I (according to the present invention): water 50 g, basil 13 g, sunflower oil 15 g, cashews 6g, citrus fiber (HERBACEL^{®} AQ^{®} Plus Citrus) 0.5 g; subjected to high-pressure homogenization (280 bar) by homogenizer NS2006 L by the company GEA Niro Soavi^{®}.
- Formulation II (not according to the invention): water 56 g, basil 13 g, sunflower oil 15 g, citrus fiber (HERBACEL^{®} AQ^{®} Plus Citrus) 0.5 g; subjected to the high-pressure homogenization (280 bar) by homogenizer NS2006 L by the company GEA Niro Soavi.
- Formulation III (not according to the invention): water 56 g, basil 13 g, sunflower oil 15 g, citrus fiber (HERBACEL^{®} AQ^{®} Plus Citrus) 0.5 g; subjected to a simple grinding by a household blender (speed 10000 rpm).
- Formulation IV (not according to the invention): water 50 g, basil 13 g, sunflower oil 15 g, cashews 6 g, citrus fiber (HERBACEL^{®} AQ^{®} Plus Citrus) 0.5 g; subjected to a simple grinding by a household blender (speed 10000 rpm).

The formulations I and IV comprise 6 g of cashews (6% by weight of the total weight of the formulation), while the formulations II and III are free of any oleaginous seeds.

The formulations I and II were moreover obtained by high-pressure homogenization, while the formulations III and IV were homogenized by a household kitchen blender.

All samples were placed in glass jars, sealed and kept at room temperature (25°) for 15 days.

At the end of this time period, the stability of the samples was evaluated from a physical point of view.

As can be well seen from Figure 1, the only tested formulation which maintains physical stability at the end of the 2 weeks period was the formulation according to the present invention (formulation I), containing 6% cashews and subjected to a step of high-pressure homogenization (280 bar).

On the contrary, formulations II and III, which were free of oleaginous seeds, showed a distinguishable separation of the aqueous phase from the fat phase, although in particular formulation II was subjected to high-pressure homogenization.

The formulation IV, which contained 6% of cashews but obtained by homogenization by a household kitchen blender, showed a beginning of separation of the aqueous phase from the fat phase.

It is therefore clear that only the high-pressure homogenization of a formulation containing a vegetable fiber and an oleaginous seed, as defined in the above-mentioned formulation I, guarantees the physical stability of the formulation for its entire shelf-life at room temperature.

## Claims

1. A ready-to-use emulsified food formulation, being free of food additives consisting of thickeners, emulsifiers and stabilizers, comprising at least one vegetable in a finely divided form, vegetable oil, water, and at least one oleaginous seed in a finely divided form,
wherein said oleaginous seed is present in a quantity comprised between 0.1% and 15% by weight of the total weight of said formulation,
said emulsified food formulation being obtained by homogenization carried out at a pressure equal to or higher than 10000 kPa and being **characterized by** a modal diameter of the particles contained therein higher than or equal to 300 µm and by additionally containing a vegetable fiber in a finely divided form, having a fiber content higher than 70% w/w and a water binding capacity higher than 5 g water/g dry matter.

2. Food formulation according to claim 1, wherein said vegetable fiber in a finely divided form has a humidity content less than 10%.

3. Food formulation according to claim 1 or 2, wherein the fiber content of said vegetable fiber is comprised between 75% and 80% w/w and the water binding capacity of said vegetable fiber is comprised between 6.0 and 28.0 g water/g dry matter.

4. Food formulation according to any one of claims 1 to 3, wherein the modal diameter of the particles contained in said formulation is comprised between about 300 and 1500 micrometers, preferably between 700 and 900 micrometers.

5. Food formulation according to any one of claims 1 to 4, wherein said homogenization is carried out at a pressure comprised between 15000 kPa and 30000 kPa.

6. Food formulation according to any one of claims 1 to 5, wherein said at least one vegetable fiber in a finely divided form is selected from the group comprising citrus fiber, apple fiber, pea fiber, potato fiber, carrot fiber and rice fiber, and has an average particle size equal to or less than 1500 µm.

7. Food formulation according to any one of claims 1 to 6, wherein said at least one oleaginous seed in a finely divided form is selected from the group comprising almond, cashew, pistachio, hazelnut, walnut, pecan nut, macadamia nut, pine nuts, hemp seeds, sunflower seeds, pumpkin seeds, flax seeds, peanuts, and chia seeds, and has an average particle size equal to or less than 1500 µm.

8. Food formulation according to any one of claims 1 to 7, wherein said vegetable fiber is citrus fiber, and said oleaginous seed is cashew.

9. Food formulation according to any one of claims 1 to 8, wherein said vegetable fiber is apple fiber, and said oleaginous seed is almond.

10. Food formulation according to any one of claims 1 to 9, wherein said at least one vegetable in a finely divided form is selected from the group consisting of basil, parsley, thyme, marjoram and oregano and it is preferably basil.

11. Food formulation according to claim 9, wherein said at least one vegetable in a finely divided form is present in a quantity comprised between 10% and 15% by weight of the total weight of the formulation and has an average particle size equal to or less than 1500 µm.

12. Food formulation according to any one of claims 1 to 11, wherein said vegetable oil is selected from sunflower oil, corn oil, rice oil, sesame oil, peanut oil and olive oil, preferably extra virgin olive oil, and it is preferably sunflower oil.

13. Food formulation according to claim 12, wherein said vegetable oil is present in a quantity comprised between 10% and 15% by weight of the total weight of the formulation.

14. Food formulation according to any one of claims 1 to 13, further comprising at least one ingredient selected from salt, sugars, starches, vegetable proteins, legumes, garden vegetables, leafy greens, cereals and natural flavourings.

15. Food formulation according to any one of claims 1 to 14, further comprising at least one acidifying ingredient selected from the group consisting of citrus juices and vinegar.

16. Food formulation according to any one of claims 1 to 15, having a rotational viscosity greater than 80 Pa•s, preferably greater than 115 Pa•s, at a temperature of 22°C.

17. Food formulation according to any one of claims 1 to 16, **characterized by** a pH comprised between 3.0 and 5.0, preferably between 3.5 and 3.9.

18. Food formulation according to any one of claims 1 to 17,
**characterized in that** it has a value of water activity (a_{w}) higher than or equal to 0.95, preferably comprised between 0.95 and 0.99.

19. Food formulation according to any one of claims 1 to 18, wherein said formulation is storable at a temperature comprised between 2°C and 30°C for a time period of at least two weeks, preferably 24 months.

20. Use of a food formulation according to any one of claims 1 to 19 as a condiment.

## Patentansprüche

1. Gebrauchsfertige emulgierte Lebensmittelformulierung, die frei von Lebensmittel-Zusatzstoffen bestehend aus Verdickungsmitteln, Emulgatoren und Stabilisatoren ist, umfassend mindestens ein Gemüse in fein verteilter Form, Pflanzenöl, Wasser, und mindestens einen ölhaltigen Samen in fein verteilter Form,
wobei der ölhaltige Samen in einer Menge zwischen 0,1 und 15 Gewichtsprozent des Gesamtgewichts der Formulierung enthalten ist,
die emulgierte Lebensmittelformulierung durch Homogenisierung bei einem Druck gleich oder über 10.000 kPa erhalten wird, und durch einen modalen Durchmesser der in ihr enthaltenen Partikel von über oder gleich 300 µm gekennzeichnet wird und zusätzlich eine pflanzliche Faser in fein verteilter Form mit einem Fasergehalt von mehr als 70 % (w/w) und einem Wasserbindungsvermögen von mehr als 5 g Wasser/g Trockensubstanz enthält.

2. Lebensmittelformulierung nach Anspruch 1, wobei die pflanzliche Faser in fein verteilten Form einen Feuchtigkeitsgehalt von weniger als 10% aufweist.

3. Lebensmittelformulierung nach Anspruch 1 oder 2, wobei der Fasergehalt der pflanzlichen Faser zwischen 75 % und 80 % (w/w) beträgt und das Wasserbindungsvermögen der pflanzlichen Faser zwischen 6,0 und 28,0 g Wasser/g Trockensubstanz beträgt.

4. Lebensmittelformulierung nach einem der Ansprüche 1 bis 3, wobei der modale Durchmesser der Partikel, die in der Formulierung enthalten sind, zwischen etwa 300 und 1500 Mikrometern, vorzugsweise zwischen 700 und 900 Mikrometern beträgt.

5. Lebensmittelformulierung nach einem der Ansprüche 1 bis 4, wobei die Homogenisierung bei einem Druck, der zwischen 15.000 kPa und 30.000 kPa beträgt, durchgeführt wird.

6. Lebensmittelformulierung nach einem der Ansprüche 1 bis 5, wobei die mindestens eine pflanzliche Faser in fein verteilter Form aus der Gruppe ausgewählt ist, die Zitrusfasern, Apfelfasern, Erbsenfasern, Kartoffelfasern, Karottenfasern und Reisfasern umfasst, und eine durchschnittliche Partikelgröße gleich oder unter 1500 µm aufweist.

7. Lebensmittelformulierung nach einem der Ansprüche 1 bis 6, wobei der mindestens eine ölhaltige Samen in fein verteilten Form aus der Gruppe ausgewählt ist, die Mandel, Cashewnuss, Pistazie, Haselnuss, Walnuss, Pekannuss, Macadamianuss, Pinienkerne, Hanfsamen, Sonnenblumenkerne, Kürbiskerne, Leinsamen, Erdnüsse und Chiasamen umfasst, und eine durchschnittliche Partikelgröße gleich oder unter 1500 µm aufweist.

8. Lebensmittelformulierung nach einem der Ansprüche 1 bis 7, wobei die pflanzliche Faser eine Zitrusfaser und der ölhaltige Samen eine Cashewnuss ist.

9. Lebensmittelformulierung nach einem der Ansprüche 1 bis 8, wobei die pflanzliche Faser eine Apfelfaser und der ölhaltige Samen eine Mandel ist.

10. Lebensmittelformulierung nach einem der Ansprüche 1 bis 9, wobei das mindestens eine Gemüse in fein verteilter Form ausgewählt ist aus der Gruppe bestehend aus Basilikum, Petersilie, Thymian, Majoran und Oregano, und es vorzugsweise Basilikum ist.

11. Lebensmittelformulierung nach Anspruch 9, wobei das mindestens eine Gemüse in fein verteilter Form in einer Menge vorhanden ist, die zwischen 10 und 15 Gewichtsprozent des Gesamtgewichts der Formulierung beträgt, und eine durchschnittliche Partikelgröße gleich oder unter 1500 µm aufweist.

12. Lebensmittelformulierung nach einem der Ansprüche 1 bis 11, wobei das Pflanzenöl ausgewählt ist aus Sonnenblumenöl, Maisöl, Reisöl, Sesamöl, Erdnussöl und Olivenöl, vorzugsweise extra natives Olivenöl, und es vorzugsweise Sonnenblumenöl ist.

13. Lebensmittelformulierung nach Anspruch 12, wobei das Pflanzenöl in einer Menge zwischen 10 und 15 Gewichtsprozent des Gesamtgewichts der Formulierung vorliegt.

14. Lebensmittelformulierung nach einem der Ansprüche 1 bis 13, weiterhin umfassend mindestens einen Bestandteil ausgewählt aus Salz, Zucker, Stärke, pflanzlichen Proteinen, Hülsenfrüchten, Gartengemüse, Blattgemüse, Getreide und natürlichen Aromen.

15. Lebensmittelformulierung nach einem der Ansprüche 1 bis 14, weiterhin umfassend mindestens einen säuernden Inhaltsstoff, der ausgewählt ist aus der Gruppe bestehend aus Zitrussäften und Essig.

16. Lebensmittelformulierung nach einem der Ansprüche 1 bis 15, mit einer Rotationsviskosität von mehr als 80 Pa*s, vorzugsweise größer als 115 Pa*s, bei einer Temperatur von 22°C.

17. Lebensmittelformulierung nach einem der Ansprüche 1 bis 16, **gekennzeichnet durch** einen pH-Wert, der Werte zwischen 3,0 und 5,0 umfasst, vorzugsweise zwischen 3,5 und 3,9.

18. Lebensmittelformulierung nach einem der Ansprüche 1 bis 17, **dadurch gekennzeichnet, dass** sie einen Wert der Wasseraktivität (a_{w}) größer als oder gleich 0,95 aufweist, vorzugsweise zwischen 0,95 und 0,99.

19. Lebensmittelformulierung nach einem der Ansprüche 1 bis 18, wobei die Formulierung bei einer Temperatur, die Werte zwischen 2°C und 30°C umfasst, für eine Zeitspanne von mindestens zwei Wochen, vorzugsweise 24 Monate, lagerfähig ist.

20. Verwendung einer Lebensmittelformulierung gemäß einem der Ansprüche 1 bis 19 als Würzmittel.

## Revendications

1. Une formulation alimentaire émulsionnée prête à l'emploi, exempte d'additifs alimentaires constitués d'épaississants, d'émulsifiants et de stabilisants, comprenant au moins un légume sous une forme finement divisée, de l'huile végétale, de l'eau et au moins une graine oléagineuse sous une forme finement divisée.
ladite graine oléagineuse étant présente en une quantité comprise entre 0,1 % et 15 % en poids du poids total de ladite formulation,
ladite formulation alimentaire émulsionnée étant obtenue par homogénéisation effectuée à une pression égale ou supérieure à 10000 kPa et étant **caractérisée par** un diamètre modal des particules contenues en elle supérieur ou égal à 300 µm et par le fait de contenir de façon additionnelle une fibre végétale sous une forme finement divisée, ayant une teneur en fibres supérieure à 70 % en poids et une capacité de fixation d'eau supérieure à 5 g d'eau/g de matière sèche.

2. Formulation alimentaire selon la revendication 1, dans laquelle ladite fibre végétale sous une forme finement divisée a une teneur en humidité inférieure à 10 %.

3. Formulation alimentaire selon la revendication 1 ou la revendication 2, dans laquelle la teneur en fibres de ladite fibre végétale est comprise entre 75 % et 80 % en poids et la capacité de fixation de l'eau de ladite fibre végétale est comprise entre 6,0 et 28,0 g d'eau/g de matière sèche.

4. Formulation alimentaire selon l'une quelconque des revendications 1 à 3, dans laquelle le diamètre modal des particules contenues dans ladite formulation est compris entre environ 300 et 1500 micromètres, de préférence entre 700 et 900 micromètres.

5. Formulation alimentaire selon l'une quelconque des revendications 1 à 4, dans laquelle ladite homogénéisation est effectuée à une pression comprise entre 15000 kPa et 30000 kPa.

6. Formulation alimentaire selon l'une quelconque des revendications 1 à 5, dans laquelle ladite au moins une fibre végétale sous une forme finement divisée est choisie dans le groupe comprenant la fibre d'agrumes, la fibre de pomme, la fibre de pois, la fibre de pomme de terre, la fibre de carotte et la fibre de riz, et a une taille de particule moyenne égale ou inférieure à 1500 µm.

7. Formulation alimentaire selon l'une quelconque des revendications 1 à 6, dans laquelle ladite au moins une graine oléagineuse sous une forme finement divisée est choisie dans le groupe comprenant l'amande, la noix de cajou, la pistache, la noisette, la noix, la noix de pécan, la noix de macadamia, les pignons de pin, les graines de chanvre, les graines de tournesol, les graines de citrouille, les graines de lin, les cacahuètes et les graines de chia, et a une taille moyenne de particule égale ou inférieure à 1500 µm.

8. Formulation alimentaire selon l'une quelconque des revendications 1 à 7, dans laquelle ladite fibre végétale est une fibre d'agrume, et ladite graine oléagineuse est de la noix de cajou.

9. Formulation alimentaire selon l'une quelconque des revendications 1 à 8, dans laquelle ladite fibre végétale est la fibre de pomme, et ladite graine oléagineuse est l'amande.

10. Formulation alimentaire selon l'une quelconque des revendications 1 à 9, dans laquelle ledit au moins un légume sous une forme finement divisée est choisi dans le groupe constitué par le basilic, le persil, le thym, la marjolaine et l'origan et il s'agit de préférence du basilic.

11. Formulation alimentaire selon la revendication 9, dans laquelle ledit au moins un légume sous une forme finement divisée est présent en une quantité comprise entre 10% et 15% du poids total de la formulation et a une taille de particule moyenne égale ou inférieure à 1500 µm.

12. Formulation alimentaire selon l'une quelconque des revendications 1 à 11, dans laquelle ladite huile végétale est choisie parmi l'huile de tournesol, l'huile de maïs, l'huile de riz, l'huile de sésame, l'huile d'arachide et l'huile d'olive, de préférence l'huile d'olive vierge extra, et il s'agit de préférence d'huile de tournesol.

13. Formulation alimentaire selon la revendication 12, dans laquelle ladite huile végétale est présente en une quantité comprise entre 10% et 15% du poids total de la formulation.

14. Formulation alimentaire selon l'une quelconque des revendications 1 à 13, comprenant en outre au moins un ingrédient choisi parmi le sel, les sucres, les amidons, les protéines végétales, les légumineuses, les légumes du potager, les légumes à feuilles, les céréales et les arômes naturels.

15. Formulation alimentaire selon l'une quelconque des revendications 1 à 14, comprenant en outre au moins un ingrédient acidifiant choisi dans le groupe constitué par les jus d'agrumes et le vinaigre.

16. Formulation alimentaire selon l'une quelconque des revendications 1 à 15, ayant une viscosité rotationnelle supérieure à 80 Pa•s, de préférence supérieure à 115 Pa•s, à une température de 22°C.

17. Formulation alimentaire selon l'une quelconque des revendications 1 à 16, **caractérisée par** un pH compris entre 3,0 et 5,0, de préférence entre 3,5 et 3,9.

18. Formulation alimentaire selon l'une quelconque des revendications 1 à 17, **caractérisée en ce qu'**elle a une valeur d'activité de l'eau (a_{w}) supérieure ou égale à 0,95, de préférence comprise entre 0,95 et 0,99.

19. Formulation alimentaire selon l'une quelconque des revendications 1 à 18, dans laquelle ladite formulation est stockable à une température comprise entre 2°C et 30°C pendant une période de temps d'au moins deux semaines, de préférence 24 mois.

20. Utilisation d'une formulation alimentaire selon l'une quelconque des revendications 1 à 19 en tant que condiment.
